# EUROPEAN PATENT SPECIFICATION

(11) **EP 0 616 875 B1**
(45) Date of publication and mention of the grant of the patent: **13.01.1999**
(21) Application number: 93302364.0
(22) Date of filing: 26.03.1993
(51) Int. Cl.: B25J 17/02, B25J 15/06

(54) **Carrying and positioning robots**
Handhabungs- und Positionierroboter
Robots de transfert et de positionnement

(43) Date of publication of application: 28.09.1994
(73) Proprietor: HEIAN CORPORATION, Hamamatsu-shi, Shizuoka-ken (JP)
(72) Inventor: Suzuki, Nobuyoshi, Hamamatsu-shi, Shizuoka-ken (JP)
(74) Representative: Gordon, Michael Vincent

(56) References cited:
- EP-A- 0 149 806
- EP-A- 0 247 901
- DE-A- 3 923 672
- GB-A- 2 168 029
- GB-A- 2 191 467
- US-A- 4 749 219
- US-A- 4 778 329
- US-A- 4 820 114
- US-A- 4 852 926
- US-A- 4 887 351

## Description

The present invention relates to carrying and positioning robots.

It is known from EP-A-0149806 (closest prior art) for a robot to have a working arm, or micro-manipulator to carry out large movements, a base carried by the working arm, at least one supporting bar carried by the base, and for hydraulic piston and cylinder assemblies at right angles to one another to provide a micro-manipulator between the end of the working arm and the supporting bar. It is also known from US-A-4778329 to provide a robot with a working arm as the sole movement provider but to provide a sprung lost-motion mechanism between the free end of the working arm and the object being transported. Finally, DE-A-3923672 discloses a robot arm including suction heads which engage an object to be lifted and which, in response to being mechanically pressed against the object to be lifted allow a greater degree of vacuum to be applied to the object.

According to this invention, a robot comprises a working arm, a base carried by the working arm, at least one supporting bar carried by the base, and a plurality of suction pads carried by the or each of the supporting bars, wherein a first member is carried by the working arm, a second member is carried by the first member to be movable relatively to the first member in a first direction (X), a first cylinder is connected between the first member and the second member to constrain, but allow, said motion of the second member relatively to the first member when driven by the working arm, the base is carried by the second member to be movable relatively to the second member in a second direction substantially perpendicular to the first direction, and a second cylinder is connected between the second member and the base to constrain, but allow, said motion of the base relatively to the second member when driven by the working arm;
and wherein said plurality of suction pads are respectively provided with a valve chamber having a main connecting hole and a smaller connecting hole, both of which are connectible through a passageway to a source of suction, and a valve body is inserted within the valve chamber and is freely movable up and down to move up to close the main connecting hole when the source of suction is driven and to move down to open the main connecting hole when a pad member connected to the valve chamber is covered by an object (20).

Preferably, the first member is carried by a connecting member which is rotatably carried by the working arm, and the first and second control means are in the form of cylinders - the above arrangement, particularly the preferred arrangement, allows an object to be positioned simply and accurately.

In the known robot, the or each of the suction pads is of a generally rigid construction with the result that there are difficulties in obtaining a satisfactory suction seal with a surface which is uneven.

Preferablyeach of the suction pads has a mouth defined by a soft member which is resiliently restorable to its original state after deformation. Preferably, the soft member is made of rubber foam, urethane foam or vinyl chloride foam allows the application of the suction to be continued around surface steps or irregularities of less than a predetermined extent.

Several robots, embodying different aspects of the present invention, will now be described in more detail, by way of example only, with reference to the accompanying drawings wherein:-
Fig. 1 shows a front view of a robot embodying the present invention;
Fig. 2 shows a plan view of the robot in Fig. 1;
Fig. 3 shows a sectional view of a suction pad for the robot in Fig. 1;
Fig. 4 shows a sectional view of the suction pad in Fig. 3 during use;
Fig. 5 shows a schematic perspective view of another robot embodying the present invention in its carrying mode;
Fig. 6 shows a schematic perspective view of the robot in Fig. 5 after adjustment in one direction;
Fig. 7 shows a schematic perspective view of the robot in Fig. 5 after adjustment in another direction;
Fig. 8 shows a sectional view of a suction pad for a further robot embodying the present invention; and
Fig. 9 shows a front view of the suction pad in Fig. 8 during use.

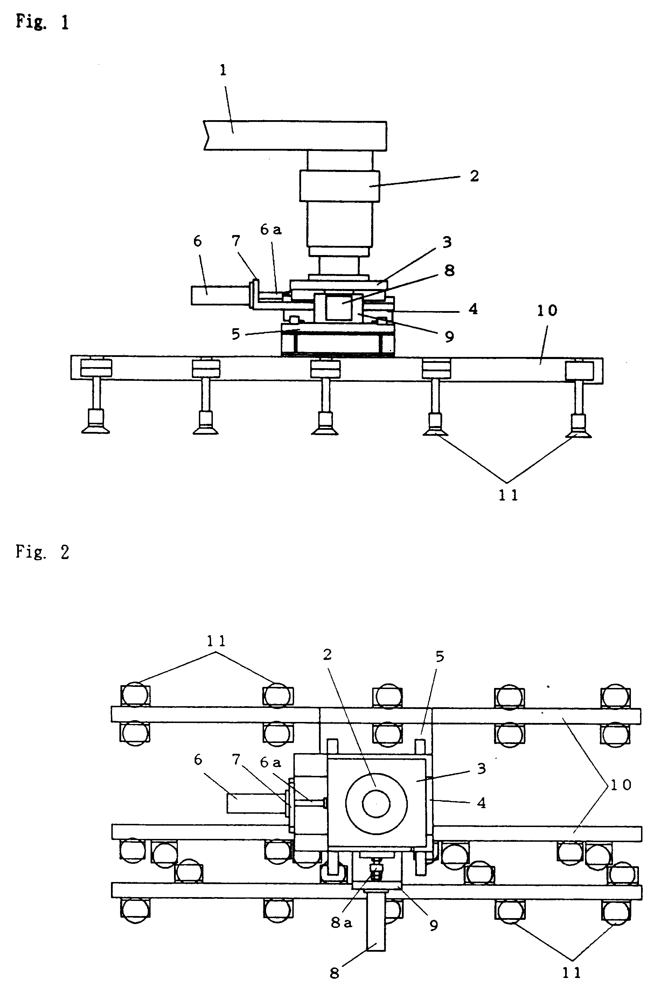

Referring initially to Figs. 1 and 2, a carrying and positioning robot has a working arm 1, a rotatable connecting member 2 connected to the working arm 1, and a first member 3 fixed to the connecting member 2. A second member 4 is attached to the first member 3 to reciprocate in one direction, and a base 5 is attached to the second member 4 to reciprocate at a right angle to the motion of the second member 4.

A working shaft 6a of a first cylinder 6 is connected to the first member 3, and the first cylinder 6 is fixed to a supporting member 7 which is an extended portion of the second member 4. The cylinder 6 can be double-acting to more easily control the spatial position of the second member 4 relatively to the first member 3. Furthermore, a working shaft 8a of a second cylinder 8 is connected to the second member 4, and the second cylinder 8 is fixed to a supporting member 9 which is an extended portion of the base 5. The cylinder 8 can be double-acting to more easily control the spatial position of the base 5 relatively to the second member 4.

Three supporting bars 10 are fixed to the base 5 and a plurality of suction pads 11 are attached to each of the supporting bars 10.

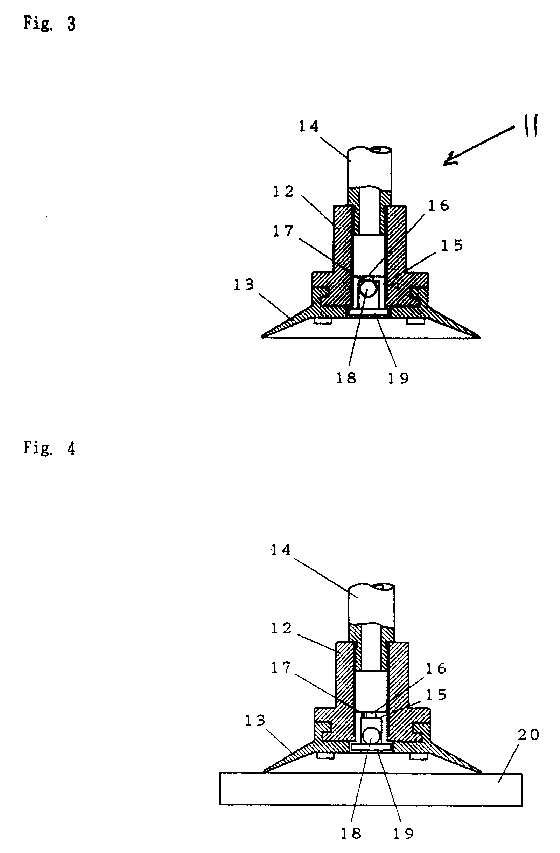

As shown in Fig. 3, a suction pad 11 has a pad body 12, a pad member 13 which is attached to an under portion of the pad body 12 to define a mouth, and a tube member 14 which is connected to an upper portion of the pad body 12 and leads to suction apparatus (not shown).

A valve chamber 15 is formed in the pad body 12, a main connecting hole 16 and a smaller connecting hole 17 are formed in a wall of the valve chamber 15 and are connected to the tube member 14, a ball valve 18 is located in the valve chamber 15 and a stopper 19 is so attached to the under portion of the valve chamber 15 that the ball valve 18 is retained.

In such a pad 11, when the suction apparatus is started, the air is sucked from the main connecting hole 16 and the smaller connecting hole 17 in the valve chamber 15. Since the pressure in the valve chamber 15 becomes low, as shown in Fig. 3, the main connecting hole 16 is closed by rising of the ball valve 18, but the smaller connecting hole 17 remains open and air is sucked through it.

As shown in Fig. 4, when the pad member 13 is covered by an object 20, the air in the valve chamber 15 and between the pad member 13 and the object 20 is sucked through the smaller connecting hole 17. Accordingly the pressure in the valve chamber 15 becomes low gradually and when it becomes the same as that in the tube member 14, the ball valve 18 falls onto the stopper 19. The object 20 is now exposed to full suction from the main connecting hole 16. The ball valves 18 in any suction pads 11 which are not covered by the object 20 still close their main connecting holes 16 so that there is less wasted suction. The object 20 which is sucked by the suction pads 11 does not fall and can be safely carried.

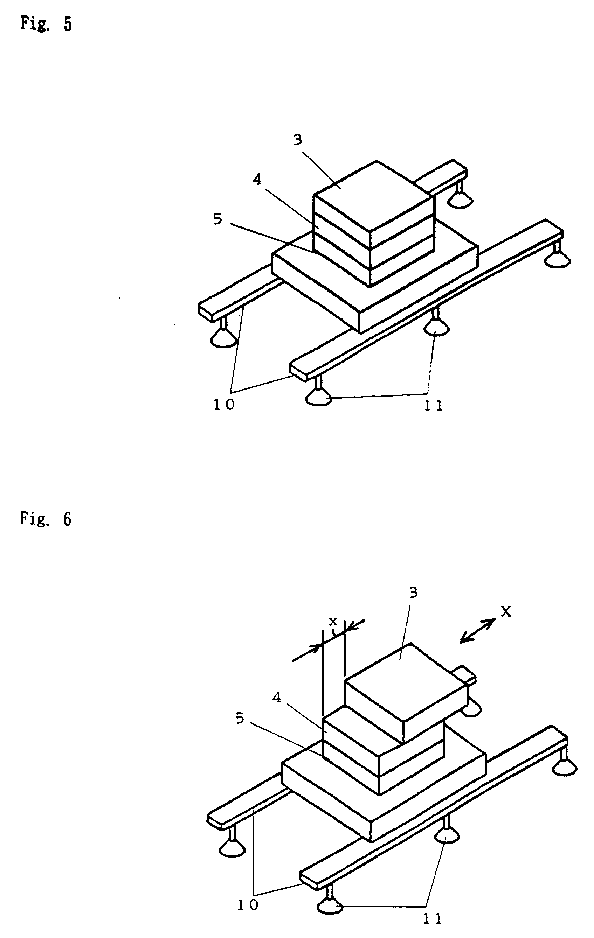

In the robot shown schematically in Fig. 5, the first member 3 and the second member 4 are preferably aligned by the cylinders 6 and 8 in the state for carrying of the object 20.

When the object 20 sucked by the suction pads 11 has been carried to roughly the predetermined position, and touches a positioning stopper (not shown), the inclination of the object 20 to that positioning stopper is first rectified by rotation of the connecting member 2.

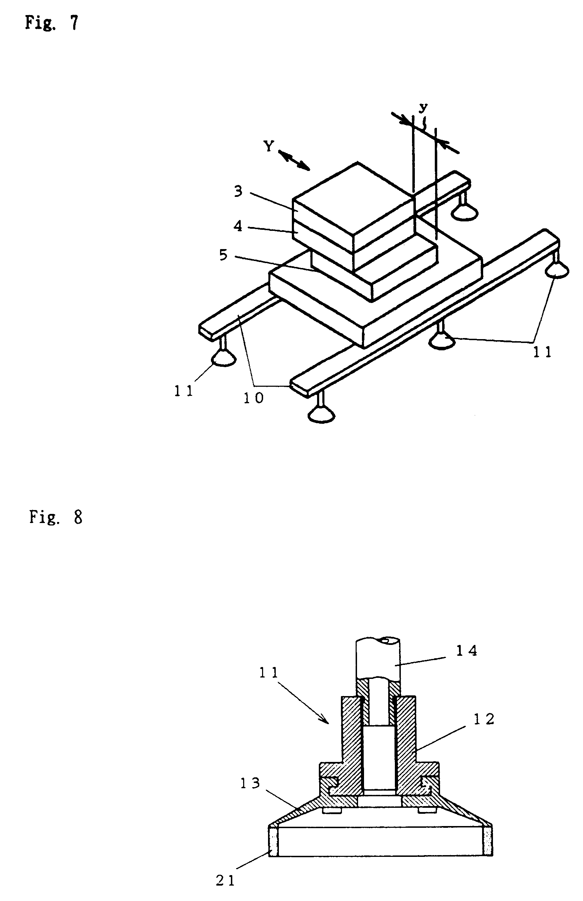

If adjustment is required in the X direction, as shown in Fig. 6, the second member 4, and all other components carried thereby including the suction pads 11 carrying the object 20, are moved or are allowed to move by a distance such as distance x. The force is applied to for example the object 20 by an external pushing member, such as one of the positioning stops, with the cylinder 6 being operable subsequently to return the second member 4 to its original position relatively to the first member 3. If adjustment is required in the Y direction, as shown in Fig. 7, the base 5, and all other components carried thereby, are moved or are allowed to move by a distance such as distance y. The force is applied by an external pushing member in a manner similar to that described above.

As explained above, the robot in the present invention can carry the object 20 regardless of the size thereof because the main connecting holes 16 in the suction pads 11 apart from the suction pads 11 sucking the object 20 are closed by the ball valves 18. The object 20 can be positioned at a predetermined position because the first and second members 3 and 4 are attached between the connecting member 2 of the working arm 1 of the robot and the base 5.

In a perspective view of a suction pad of another embodiment in the present invention, as shown in Fig. 8, there is a suction pad 11, a pad body 12, a pad member 13 and a tube member 14 as previously described, but there is also a soft member 21, which restores to the original state after pushed, and is attached to the under portion of the pad member 13.

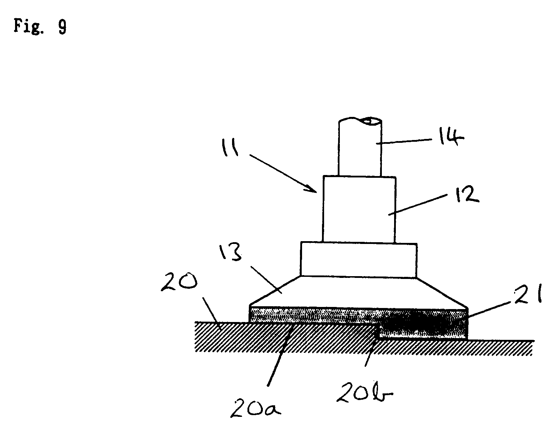

In the suction pad in this embodiment, as shown in Fig. 9, when the object 20 has a flat portion 20a and a step-shaped portion 20b, the soft member 21 is contracted at the flat portion 20a and the soft member 21 is transformed in accordance with the step-shaped portion 21b to close the gap between the step-shaped portion 20b and the soft member 21. Accordingly, because no gap is formed between the step-shaped portion 20b and the soft member 21, the air doesn't leak, and the object 20 is safely carried.

Even if the surface of the object 20 is uneven, since the soft member 21 of the suction pad 11 is transformed in accordance with the uneven portion, the air doesn't leak out from between the uneven portion of the object 20 and the soft member 21.

This soft member 21 can use rubber foam, urethane foam, vinyl chloride foam or any high contractive and wear-resistant material having a restoring force without air-leakage.

## Claims

1. A robot comprising a working arm (1), a base (5) carried by the working arm, at least one supporting bar (10) carried by the base, and a plurality of suction pads (11) carried by the or each of the supporting bars, wherein a first member (3) is carried by the working arm (1), a second member (4) is carried by the first member (3) to be movable relatively to the first member (3) in a first direction (X), a first cylinder (6) is connected between the first member (3) and the second member (4) to constrain, but allow, said motion of the second member (4) relatively to the first member (3) when driven by the working arm (1), the base (5) is carried by the second member (4) to be movable relatively to the second member (4) in a second direction (Y) substantially perpendicular to the first direction, and a second cylinder (8) is connected between the second member (4) and the base (5) to constrain, but allow, said motion of the base (5) relatively to the second member (4) when driven by the working arm (10); and wherein said plurality of suction pads (11) are respectively provided with a valve chamber (15) having a main connecting hole (16) and a smaller connecting hole (17), both of which are connectible through a passageway (12, 14) to a source of suction, and a valve body (18) is inserted within the valve chamber (15) and is freely movable up and down to move up to close the main connecting hole (16) when the source of suction is driven and to move down to open the main connecting hole (16) when a pad member (13) connected to the valve chamber (15) is covered by an object (20).

2. A robot according to claim 1, in which the first member (3) is carried by a connecting member (2) which is rotatably carried by the working arm (1).

3. A robot according to claim 1 or 2, in which the movement of the object (20) in the first and second directions is prevented by positioning stops.

4. A robot according to any preceding claim, characterised in that the or each of the suction pads (11) has a mouth defined by a soft member (21) which is resiliently restorable to its original state after deformation.

5. A robot according to claim 4, characterised in that the soft member (21) is made of rubber foam, urethane foam or vinyl chloride foam.

## Patentansprüche

1. Roboter mit einem Arbeitsarm (1), einer von dem Arbeitsarm getragenen Basis (5), mindestens einem von der Basis getragenen Stützbalken (10) und einer Anzahl von Sauganlage (11), die von dem oder jedem der Stützbalken getragen sind, wobei ein erstes Teil (3) von dem Arbeitsarm (1) getragen ist, ein zweites Teil (4) von dem ersten Teil (3) getragen ist und relativ zum ersten Teil (3) in einer ersten Richtung X beweglich ist, ein erster Zylinder (6) zwischen dem ersten Teil (3) und dem zweiten Teil (4) angeschlossen ist und die Bewegung des zweiten Teils (4) relativ zum ersten Teil (3) einschränkt, sie aber zuläßt, wenn er vom Arbeitsarm (1) angetrieben ist, die Basis (5) von dem zweiten Teil (4) getragen ist und relativ zum zweiten Teil (4) in einer zweiten Richtung Y im wesentlichen rechtwinklig zur ersten Richtung beweglich ist und ein zweiter Zylinder (8) zwischen dem zweiten Teil (4) und der Basis (5) angeschlossen ist und die Bewegung der Basis (5) relativ zum zweiten Teil (4) einschränkt, sie aber zuläßt, wenn er von dem Arbeitsarm (10) angetrieben ist; und wobei die Anzahl von Sauganlagen (11) jeweils mit einer Ventilkammer (15) ausgestattet sind mit einem Hauptverbindungsloch (16) und einem kleineren Verbindungsloch (17), von denen beide durch einen Durchgang (12, 14) mit einer Saugquelle verbindbar sind, und wobei ein Ventilkörper (18) in die Ventilkammer (15) eingesetzt und frei auf- und abwärts bewegbar ist und so sich zum Verschließen des Hauptverbindungslochs (16) aufwärts bewegt, wenn die Saugquelle angetrieben ist, und sich zum Öffnen des Hauptverbindungsloch (16) abwärts bewegt, wenn ein mit der Ventilkammer (15) verbundenes Sauganlagenteil (13) von einem Objekt (20) überdeckt ist.

2. Roboter nach Anspruch 1, bei dem das erste Teil (3) von einem Verbindungsteil (2) getragen ist, welches drehbar von dem Arbeitsarm (1) getragen ist.

3. Roboter nach Anspruch 1 oder 2, bei dem die Bewegung des Objekts (20) in der ersten und zweiten Richtung durch Positionierstopps begrenzt ist.

4. Roboter nach einem der vorhergehenden Anspräche, dadurch gekennzeichnet, daß die oder jede Sauganlage (11) ein Maul aufweist, welches von einem weichen Teil (21) umgrenzt ist, welches nach einer Deformation in seinen Originalzustand elastisch rückführbar ist.

5. Roboter nach Anspruch 4, dadurch gekennzeichnet, daß das weiche Teil (21) aus Gummischaum, Urethanschaum oder Vinylchloridschaum hergestellt ist.

## Revendications

1. Robot comportant un bras de travail (1), une base (5) portée par le bras de travail, au moins une barre de support (10) portée par la base, et plusieurs ventouses (11) portées par la ou bien chacune des barres de support, dans lequel un premier élément (3) est porté par le bras de travail (1), un deuxième élément (4) est porté par le premier élément (3) afin d'être mobile par rapport au premier élément (3) dans une première direction (X), un premier cylindre (6) est relié entre le premier élément (3) et le deuxième élément (4) afin de limiter, mais permettre, ledit mouvement du deuxième élément (4) par rapport au premier élément (3) lorsqu'il est entraîné par le bras de travail (1), la base (5) est portée par le deuxième élément (4) afin d'être mobile par rapport au deuxième élément (4) dans une deuxième direction (Y) sensiblement perpendiculaire à la première direction, et un deuxième cylindre (8) est relié entre le deuxième élément (4) et la base (5) afin de limiter, mais permettre, ledit mouvement de la base (5) par rapport au deuxième élément (4) lorsqu'elle est entraînée par le bras de travail (10); et dans lequel lesdites ventouses (11) sont pourvues de manière respective d'une chambre de soupape (15) ayant un trou de raccordement principal (16) et un trou de raccordement plus petit (17), les deux pouvant être reliés par l'intermédiaire d'un passage (12, 14) à une source de dépression, et un corps de soupape (18) est inséré à l'intérieur de la chambre de soupape (15) et est librement mobile vers le haut et vers le bas afin de se déplacer vers le haut de façon à fermer le trou de raccordement principal (16) lorsque la source de dépression est commandée et afin de se déplacer vers le bas de façon à ouvrir le trou de raccordement principal (16) lorsqu'un élément de ventouse (13) relié à la chambre de soupape (15) est couvert par un objet (20).

2. Robot selon la revendication 1, dans lequel le premier élément (3) est porté par un élément de raccordement (2) qui est porté de façon rotative par le bras de travail (1).

3. Robot selon la revendication 1 ou 2, dans lequel le mouvement de l'objet (20) dans les première et deuxième directions est empêché par des butées de positionnement.

4. Robot selon l'une quelconque des revendications précédentes, caractérisé en ce que la ou bien chacune des ventouses (11) possède une embouchure définie par un élément souple (21) qui peut revenir élastiquement vers son état d'origine après déformation.

5. Robot selon la revendication 4, caractérisé en ce que l'élément souple (21) est fabriqué en mousse de caoutchouc, en mousse d'uréthanne ou en mousse de chlorure de vinyle.
